# FASCICULE DE BREVET EUROPEEN

(11) **EP 2 369 186 B1**
(45) Date de publication et mention de la délivrance du brevet: **19.09.2012**
(21) Numéro de dépôt: 11154374.0
(22) Date de dépôt: 14.02.2011
(51) Int. Cl.: F16B 21/02, F21V 15/01, F16B 21/09

(54) **Dispositif de fixation de type "quart de tour"**
Vierteldrehungs-Befestigungsvorrichtung
Quarter turn fastener

(30) Priorité: 12.03.2010 FR 1051787
(43) Date de publication de la demande: 28.09.2011
(73) Titulaire: LISI Automotive Rapid, 95650 Puiseux-Pontoise (FR)
(72) Inventeur: Jacotey, Jérémy, 78800 Houilles (FR); Maurice, Philippe, 68100 Mulhouse (FR); Bore, Michaël, 25200 Montbéliard (FR); Eckert, Christelle, 90300 Lachapelle-sous-Chaux (FR)
(74) Mandataire: Thinat, Michel

(56) Documents cités:
- EP-A1- 1 180 444
- FR-A1- 2 905 093
- GB-A- 561 395
- US-A- 3 640 173
- US-A- 4 331 413
- US-A- 5 975 822

## Description

L'invention concerne un dispositif de fixation d'un élément sur un support, par exemple pour fixer un phare sur la carrosserie d'un véhicule automobile.

Le document US 3 640 173 A montre un dispositif selon le préambule de la revendication 1.

Lorsqu'il s'agit de fixer un élément d'équipement sur un support, par exemple un phare ou un bloc de feux avant ou arrière sur la carrosserie d'un véhicule automobile ou sur un support qui est lui-même fixé sur la carrosserie, ce type de montage peut être réalisé avec des moyens de fixation comprenant au moins une vis. Cependant, sur une chaîne d'assemblage, un tel montage nécessite en général la mise à disposition de plusieurs visseuses avec des têtes spécialement adaptées aux têtes des vis. De plus, une fixation par vissage demande souvent un pré-positionnement de l'élément d'équipement avant de pouvoir procéder au vissage.

Pour réaliser ce pré-positionnement, on peut utiliser des moyens de fixation ne nécessitant pas d'outils, par exemple des moyens de clipsage ou des moyens de fixation dits "quart de tour". Alors que les moyens de clipsage sont généralement réalisés en une seule pièce et, pour le montage, sont insérés dans une perforation ou un évidement pratiqué dans le support qui doit recevoir l'élément d'équipement, les moyens de fixation dits "quart de tour" comportent parfois deux pièces : une première pièce qui est à fixer dans le support et une seconde pièce qui doit coopérer avec la première pièce pour obtenir un verrouillage.

En effet, certains moyens de fixation dits "quart de tour" comportent une pièce à garrot et une autre pièce dans laquelle la première est placée coaxialement avec une première orientation du garrot. Une fois mise en place, la pièce à garrot est tournée « d'un quart de tour » autour d'un axe de pivotement du garrot afin que le garrot prenne une seconde orientation, en général - mais pas nécessairement - perpendiculaire à la première.

Par le pivotement « quart de tour », le garrot de la première pièce s'engage sur des rampes de la seconde pièce et avance jusqu'à une position de verrouillage. En même temps, par l'avancement du garrot sur les rampes, la pièce à garrot se rapproche axialement de l'autre pièce, ce qui entraîne un rapprochement simultané de l'élément à fixer du support et ainsi la fixation de l'élément sur le support.

La fixation d'un élément sur un support par un moyen de fixation dit "quart de tour" traditionnel demande donc - exprimée en termes des axes X, Y, Z d'un système tridimensionnel - que l'élément à fixer soit positionné correctement suivant les deux axes définissant un plan du support, car le moyen de fixation dit « quart de tour » ne sait agir que suivant le troisième des trois axes, à savoir par translation suivant l'axe perpendiculaire au plan du support.

Cependant, il est des applications où la limitation à un seul degré de liberté est gênante.

En effet, lorsqu'il s'agit, par exemple, de fixer un projecteur sur la carrosserie d'un véhicule automobile, on doit assurer à la fois un positionnement correct du projecteur suivant les axes Y et Z du véhicule et un plaquage optimal du projecteur contre le bord tombant de l'aile avant suivant l'axe X du véhicule. En même temps, la pression de contact entre le projecteur et le retour d'aile doit être maîtrisée.

Le but de l'invention est de remédier à cet inconvénient.

Le but de l'invention est atteint avec un dispositif de fixation d'un élément sur un support, comprenant
un téton comportant des premiers moyens de verrouillage et qui est adapté pour pouvoir être solidaire de l'élément à fixer,
un élément de verrouillage comportant une jupe pour prendre appui sur le support et sur laquelle s'élève, autour d'un premier axe, un corps cylindrique creux comportant des seconds moyens de verrouillage complémentaires aux premiers moyens de verrouillage et qui est adapté pour pouvoir recevoir le téton de façon coaxiale afin de pouvoir pivoter autour de lui entre une position d'assemblage et une position de verrouillage
et des moyens de rattrapage de jeu agissant selon un second axe enfermant un angle avec le premier axe et qui comportent une excroissance adaptée pour pouvoir coopérer avec une piste de guidage courbe formée sur le support de façon à pouvoir tirer le téton, par le pivotement de l'élément de verrouillage, selon le second axe vers une position de fixation.

L'originalité du dispositif de l'invention réside dans le fait que l'axe de verrouillage du dispositif de fixation selon l'invention est différent de l'axe de fixation, les deux axes enfermant un angle entre eux. Selon le mode de réalisation décrit plus loin, l'axe de fixation est orienté parallèlement à la surface du support alors que l'axe de verrouillage est orienté perpendiculairement à cette surface. L'angle entre les deux axes est donc un angle droit.

De cette manière, au lieu de fonctionner selon la conception traditionnelle, qui reprend en quelque sorte le principe du vissage où le moyen de verrouillage tire l'élément à fixer suivant l'axe de pivotement de verrouillage, le dispositif de fixation de l'invention déplace l'axe de verrouillage, et avec lui l'élément à fixer, dans une direction différente de celle de l'axe de pivotement de verrouillage. Selon le mode de réalisation décrit plus loin, l'élément à fixer est tiré parallèlement au support. De plus, le dispositif de fixation selon l'invention comprend des moyens résiliant agissant uniquement dans la direction de l'axe de fixation, ce qui n'a donc pas d'influence sur le fonctionnement du mécanisme de verrouillage proprement dit.

Le pivotement de la seconde pièce portant généralement sur un quart de tour, ces éléments de fixation sont appelés des éléments de fixation ou de verrouillage "quart de tour". Toutefois, comme il est aisé à comprendre, le principe de fonctionnement de ces moyens de fixation n'est pas limité au seul quart de tour.

En conséquence, même si par la suite, pour simplifier la présente description, il est fait référence uniquement à un pivotement d'un quart de tour, ceci est à comprendre comme un "tour partiel" incluant aussi d'autres angles de pivotement que 90°.

Selon le mode de réalisation décrit plus loin et représenté sur les dessins annexés, le dispositif de l'invention peut avoir aussi une au moins des caractéristiques supplémentaires ci-après, considérées isolément ou selon toutes combinaisons techniquement possibles :
- les moyens de rattrapage comprennent un coulisseau comportant l'excroissance et qui est mobile, sous la contrainte d'un organe élastique, entre une position d'assemblage et la position de fixation ;
- le coulisseau est disposé mobile en translation sur un bras radial s'étendant à partir du corps cylindrique suivant le second axe ;
- l'organe élastique est un ressort de compression disposé entre une extrémité libre du bras radial et le coulisseau ;
- la jupe présente une forme concave du côté destiné à être en regard du support et comprend un évidement radial permettant le déplacement en translation de l'excroissance du coulisseau ;
- l'élément de verrouillage comprend au moins une ailette pour l'application d'un couple de verrouillage ;
- le téton est pourvu d'un plateau d'appui pour le support ;
- le téton est pourvu d'une embase adaptée pour une fixation par enfichage du téton dans l'élément ;
- le téton comprend un bras transversal pourvu de dents de verrouillage formant les premiers moyens de verrouillage et le corps cylindrique de l'élément de verrouillage est pourvu de rampes crans de verrouillage formant les seconds moyens de verrouillage ;
- la piste de guidage est un poinçonnage en demi-lune.
- l'angle de pivotement de l'élément de verrouillage entre la position d'assemblage et la position de verrouillage correspond à un quart de tour.

D'autres caractéristiques et avantages de la présente invention ressortiront de la description ci-après d'un mode de réalisation. La description est faite en référence aux dessins dans lesquels :
- la figure 1 représente un téton constituant l'une des deux pièces de base d'un dispositif de fixation selon l'invention,
- la figure 2 représente un élément de verrouillage constituant la seconde des deux pièces de base du dispositif de l'invention,
- la figure 3 représente l'élément de verrouillage de la figure 2 en une vue éclatée,
- la figure 4 représente la tête de verrouillage de l'élément de verrouillage,
- la figure 5 représente une vue schématique de dessus de l'élément de verrouillage,
- la figure 6 représente un coulisseau de l'élément de verrouillage en vue axiale,
- la figure 7 représente une partie d'un support conformé pour coopérer avec l'élément de verrouillage,
- la figure 8 représente la partie du support de la figure 7 avec le téton en position pour être inséré dans le support,
- la figure 9 représente la partie du support de la figure 7 avec le téton mis en place et avec l'élément de verrouillage en position pour être inséré dans le support,
- la figure 10 représente le dispositif de l'invention respectivement en position de montage et en position de verrouillage en une vue de dessus, et
- la figure 11 représente le dispositif de fixation de l'invention respectivement en position de montage et en position de verrouillage en une vue de dessous.

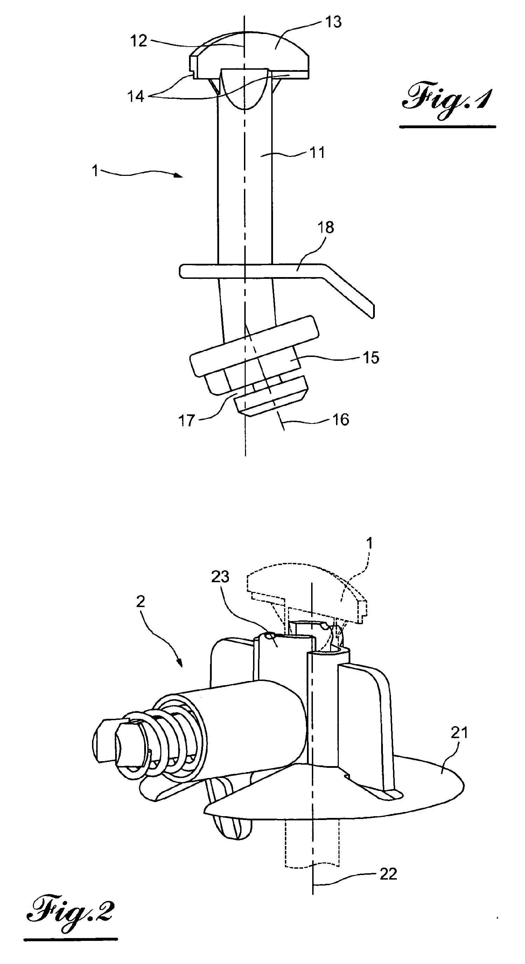

Selon le mode de réalisation représenté sur les figures 1 à 4, le dispositif de fixation de l'invention comprend un téton 1 conformé pour être fixé sur un élément A, par exemple un phare de voiture, et un élément de verrouillage 2 conformé pour coopérer avec le téton 1.

Le téton 1 est un élément essentiellement tigiforme avec un corps cylindrique 11 et un axe longitudinal 12 et avec deux extrémités opposées. La première des deux extrémités opposées est formée par un bras transversal 13 dont les deux extrémités opposées libres sont pourvues de dents de verrouillage 14 en vue de leur coopération avec l'élément de verrouillage 2. L'autre extrémité du téton 1 constitue une embase 15 ayant un axe longitudinal 16 et une rainure annulaire 17 qui permet de fixer le téton 1 par enfichage dans une ouverture prévue à cet effet sur l'élément A.

Selon le mode de réalisation représenté, l'axe 16 est oblique par rapport à l'axe 12. Toutefois, cette caractéristique est sans importance pour la présente invention, puisque ce n'est pas le téton 1 qui est pivoté mais l'élément de verrouillage 2.

Le téton 1 comprend un plateau d'appui 18 dont la position sur le corps 11 dépend de la distance axiale d'un support B par rapport à l'élément A.

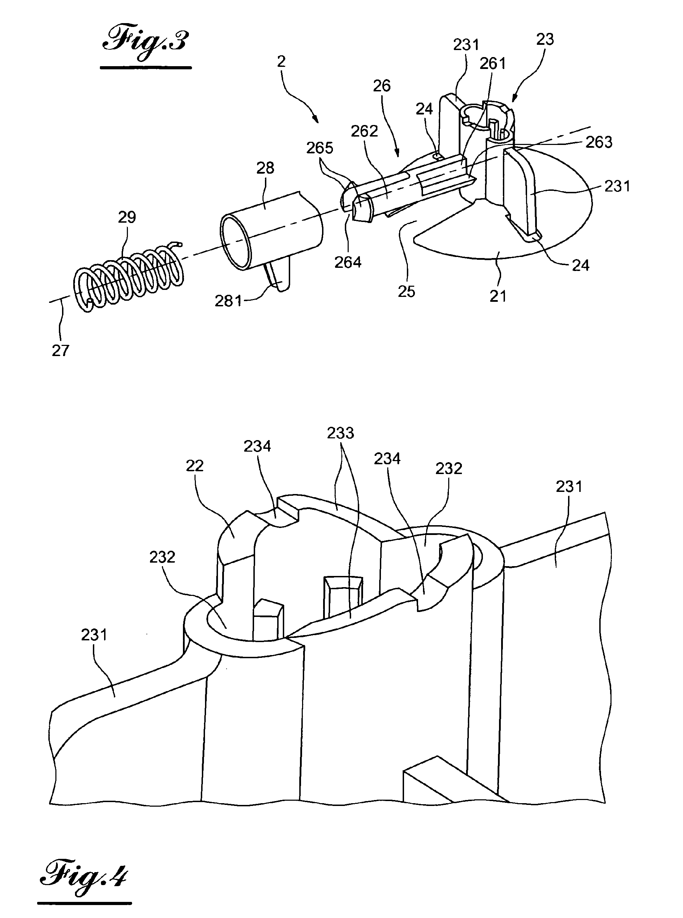

L'élément de verrouillage 2, qui est représenté sur la figure 2 en état assemblé et sur la figure 3 en une vue éclatée, comprend une jupe flexible 21 avec laquelle l'élément de verrouillage 2 prend appui sur le support B. La jupe 21 a avantageusement, mais nullement nécessairement, une forme conique. En effet, en variante, la jupe 21 pourrait avoir aussi une forme plate et être pourvue d'un rebord de façon que la jupe 21 soit dans tous les cas de figure un élément concave vu du côté qui est destiné à être en regard du support B sur lequel l'élément de verrouillage 2 doit prendre appui.

L'élément de verrouillage 2 comprend en outre un corps cylindrique creux 23 qui s'élève sur la jupe 21 autour d'un premier axe 22. Le corps cylindrique creux 23 est conformé pour être passé coaxialement sur le téton 1 de façon que, en état assemblé de l'élément de verrouillage 2, l'axe longitudinal 12 du téton 1 correspond à l'axe 22 de l'élément de verrouillage 2.

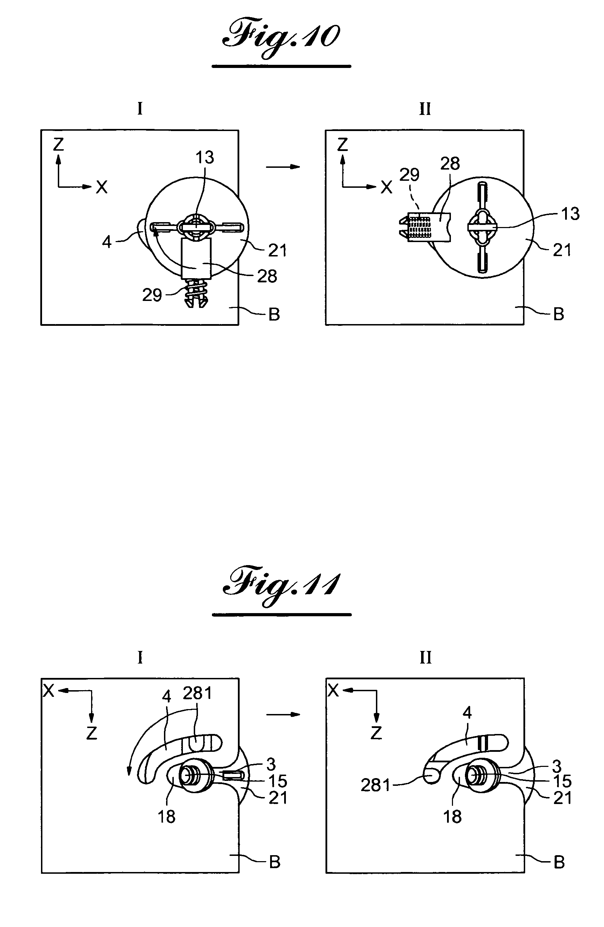

Le corps cylindrique creux 23 comprend par ailleurs avantageusement mais nullement nécessairement une ou deux ailettes 231 pour l'application d'un couple lors du verrouillage et du déverrouillage du dispositif de l'invention. A l'intérieur du corps cylindrique 23, deux rainures 232 opposées définissent une position d'assemblage I de l'élément de verrouillage 2 par rapport au téton 1 lorsque l'élément de verrouillage 2 est mis en place sur le téton 1. L'élément de verrouillage 2 comprend en outre des seconds moyens de verrouillage 234 sous la forme de deux crans de verrouillage 234 auxquels sont assorties des rampes 233 (figure 4) sur lesquelles les dents de verrouillage 14 du téton 1 se déplacent lorsque l'élément de verrouillage 2 est pivoté de la position d'assemblage I à une position de verrouillage II (figure 10).

L'élément de verrouillage 2 comprend en outre des moyens de rattrapage de jeu formé, pour l'essentiel, d'un bras radial 26 orienté selon un axe longitudinal 27 perpendiculaire à l'axe 22 du corps 23, un coulisseau 28 et un ressort 29. Les moyens de rattrapage 26 à 29 sont orientés selon l'axe 27 qui est en fait l'axe de fixation de l'élément A sur le support B. Afin que le dispositif de fixation de l'invention puisse remplir à la fois son rôle de fixation et celui de moyen de rattrapage de jeu, le coulisseau 28 est pourvu d'une excroissance 281 traversant la jupe 21 afin de pouvoir s'engager dans une ouverture formée à cet effet dans le support B. Plus précisément, la jupe 21 est pourvue d'un évidement radial 25 dans lequel l'excroissance 281 peut se déplacer d'une position d'assemblage I à une position de fixation II (figure 11).

Le bras radial 26 comprend une première partie 261 s'étendant à partir du corps cylindrique 23 et une seconde partie 262 prolongeant la première partie jusqu'à l'extrémité libre du bras radial 26. La première partie 261 présente une section transversale en forme de T renversé de façon à présenter le méplat 263 et la jupe 21 en regard.

La seconde partie 262 du bras radial 26 est essentiellement cylindrique de révolution avec une fente axiale 264 donnant à cette seconde partie une résilience limitée suffisante pour permettre le montage des moyens de rattrapage de jeu, c'est-à-dire pour pouvoir enfiler le coulisseau 28 et ensuite le ressort 29 sur le bras radial 26. Pour maintenir le ressort 29 sur le bras radial 26, l'extrémité libre du bras radial 26 est pourvue de deux excroissances demi-annulaires tronconiques 265 facilitant à la fois l'enfilage du coulisseau 28 et du ressort 29 et leur retenue après leur mise en place.

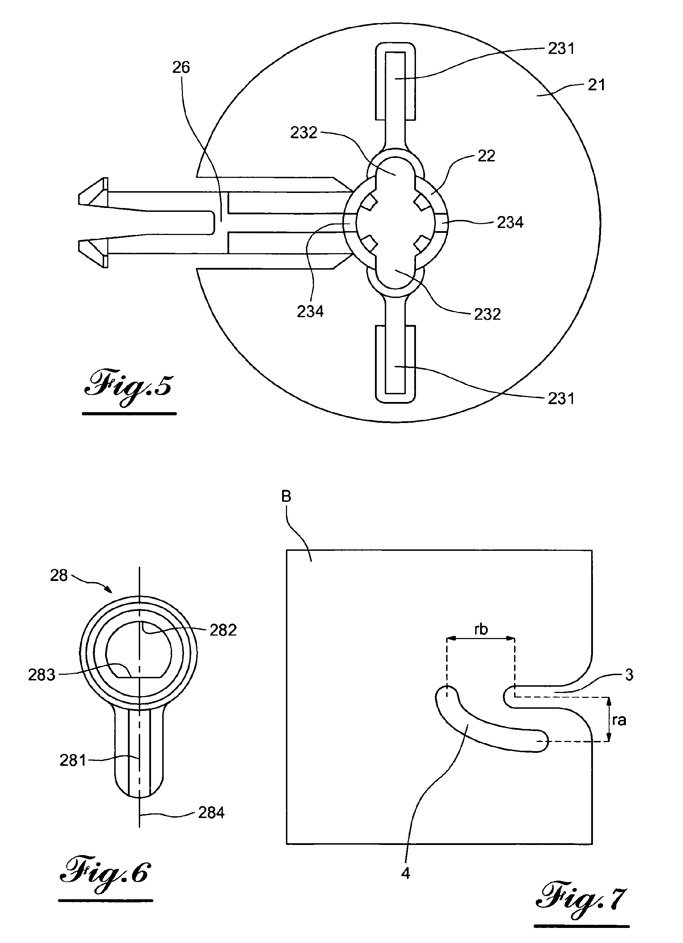

Le coulisseau 28 est une pièce tubulaire et le ressort 29 est un ressort hélicoïdal de compression. Le coulisseau 28 a une paroi intérieure 282 avec un méplat 283 (figure 6) qui ne s'étend pas nécessairement sur la longueur axiale entière du coulisseau et qui est formé, ensemble avec l'excroissance 281, de manière symétrique par rapport à un même plan de symétrie 284 passant par l'axe longitudinal du coulisseau 28. Le coulisseau 28 et le ressort 29 sont disposés coaxialement sur le bras radial 26.

Afin que l'excroissance 281 du coulisseau 28 soit orientée en permanence vers l'évidement 25 de la jupe 21, le méplat 283 coopère avec le méplat 263 formé sur le bras radial 26.

La figure 5 représente l'élément de verrouillage 2 en une vue axiale de dessus. Cette figure montre plus particulièrement la disposition angulaire des différentes pièces de l'élément de verrouillage 2 et notamment la disposition des rainures opposées 232 à l'intérieur du corps 23 qui déterminent l'orientation de l'élément de verrouillage 2 par rapport au téton 1 au moment de l'assemblage de ces deux éléments l'un avec l'autre. La figure 5 montre en plus la disposition angulaire du bras radial 26 par rapport à l'orientation du téton 1 au moment de l'assemblage.

Afin que le dispositif de fixation selon l'invention puisse produire l'effet recherché, à savoir avancer l'élément A vers sa position de fixation suivant l'axe 27 par un verrouillage par pivotement de l'élément de verrouillage 2 autour de l'axe 22, l'excroissance 281 du coulisseau 28 s'engage, au moment de la mise en place de l'élément de verrouillage 2 sur le support B, dans une piste de guidage 4 courbée. Selon l'exemple représenté, la piste 4 a une forme ressemblant à un quart d'ellipse avec des rayons ra et rb (figure 7) déterminés en fonction du jeu à rattraper.

Toutefois, la piste de guidage 4 peut aussi avoir toute autre forme courbe dont la dimension rb est plus grande que la dimension ra.

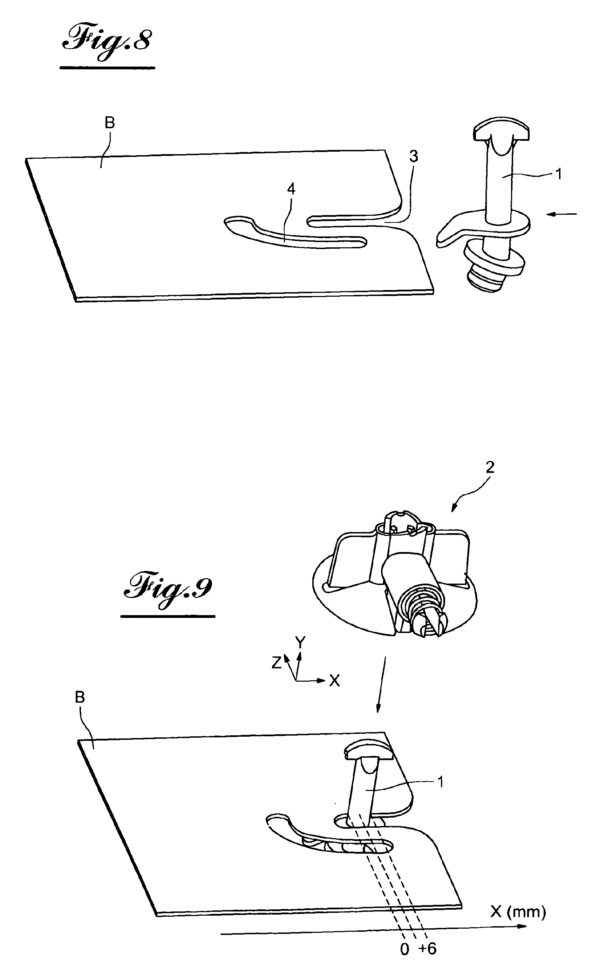

Lorsque l'élément A, sur lequel a été préalablement fixé le téton 1, est présenté dans sa position d'assemblage devant le support B (voir figure 9), le téton 1 est engagé dans une fente 3 pratiquée dans le support B et qui réalise l'isostatisme en Z de l'élément A. A la fin de la mise en place du téton 1 dans la fente 3, l'élément A duquel le téton 1 est solidaire, se positionne en X dans un intervalle de zéro à x, x étant le jeu à rattraper, qui est ici par exemple 6 mm.

A proximité de la fente 3 est formée, par poinçonnage, la piste de guidage 4. La piste de guidage 4 commence, dans le sens de mouvement de verrouillage sur un côté de la fente 3 et poursuit sa course de quart d'ellipse jusqu'à une position en prolongation de la fente 3. De cette manière, par le verrouillage de l'élément de verrouillage 2 sur le téton 1, l'isostatisme de l'élément A est réalisé en Y et le jeu en X est rattrapé de la manière suivante : Lors du pivotement de l'élément de verrouillage 2, l'excroissance 281 du coulisseau 28 s'écarte du téton 1 de par la forme de la piste 4 dans laquelle l'excroissance 281 est guidée. Le coulisseau 281 comprime le ressort 29, ce qui a pour effet de remmener le téton 1, et avec lui l'élément A, vers la position x=0 (figure 9).

Les figures 10 et 11 représentent, respectivement en des vues de dessus et en des vues de dessous, la position de l'élément de verrouillage 2 d'abord au moment de son assemblage avec le téton 1 et puis dans sa position de verrouillage. En même temps, on voit sur la figure 10 le changement de position du coulisseau 28 de la position d'assemblage I à la position de verrouillage II et sur la figure 11 le changement de position de l'excroissance 281 de la position d'assemblage I à la position de fixation II.

Le dimensionnement du ressort 29 permet de connaître précisément l'effort avec lequel l'élément A sera entraîné sur l'axe 27 pour rattraper le jeu. La maîtrise de cet effort rend possible, par exemple dans le cas de l'application à un projecteur avant qui est à rapporter à la carrosserie d'un véhicule automobile, de plafonner la pression de contact entre le projecteur et le support contre lequel il vient en butée une fois le jeu rattrapé.

En même temps, grâce à la présence de rampes 233 sur le bord supérieur du corps cylindrique 23, l'exécution du pivotement de quart de tour presse l'élément de verrouillage sur le support B et écrase ainsi la jupe flexible 21 : c'est la création de l'isostatisme en Y mentionné plus haut. Lorsque les dents de verrouillage 14 du téton s'engagent dans les crans 234 du corps cylindrique creux 23, l'élément de verrouillage 2 est verrouillé.

Le démontage de l'élément de verrouillage se fait en aplatissant la jupe flexible 21 ce qui fait abaisser le corps cylindrique creux 23 et, de cette manière, fait sortir les dents de verrouillage 14 des crans 234. Un pivotement de quart de tour à l'encontre du sens des aiguilles d'une montre déverrouille la fixation de l'élément A et permet son démontage.

Le dispositif de l'invention présente les avantages suivants :
- montage et démontage aisés sans dégradation des éléments à assembler,
- un simple mouvement de quart de tour ou, de manière plus générale, d'un tour partiel, réalise le rattrapage d'un jeu en X puis le verrouillage en Y et Z de l'élément A sur un support B,
- le rattrapage d'un jeu s'effectue sur un effort entièrement maîtrisé, et
- les composants de l'élément à verrouiller 2 à rattrapage de jeu sont simples à réaliser.

## Revendications

1. Dispositif de fixation d'un élément (A) sur un support (B), le dispositif comprenant
un téton (1) comportant des premiers moyens de verrouillage (14) et qui est adapté pour pouvoir être solidaire de l'élément (A),
un élément de verrouillage (2) comportant une jupe (21) pour prendre appui sur le support (B) et sur laquelle s'élève, autour d'un premier axe (22), un corps cylindrique creux (23) comportant des seconds moyens de verrouillage (234) complémentaires aux premiers moyens de verrouillage (14) et qui est adapté pour pouvoir recevoir le téton (1) de façon coaxiale afin de pouvoir pivoter autour de lui (1) entre une position d'assemblage (I) et une position de verrouillage (II), **caractérisé par**
des moyens de rattrapage de jeu (26 à 29) agissant selon un second axe (27) enfermant un angle avec le premier axe (12) et qui comportent une excroissance (281) adaptée pour pouvoir coopérer avec une piste de guidage courbe (4) formée sur le support (B) de façon à pouvoir tirer le téton (1), par le pivotement de l'élément de verrouillage (2), selon le second axe (27) vers une position de fixation (II).

2. Dispositif de fixation selon la revendication 1, **caractérisé en ce que** les moyens de rattrapage (26, 28, 29) comprennent un coulisseau (28) comportant l'excroissance (281) et qui est mobile, sous la contrainte d'un organe élastique (29), entre la position d'assemblage (I) et la position de fixation (II).

3. Dispositif de fixation selon la revendication 2, **caractérisé en ce que** le coulisseau (28) est disposé mobile en translation sur un bras radial (26) s'étendant à partir du corps cylindrique (23) suivant le second axe (27).

4. Dispositif de fixation selon la revendication 3, **caractérisé en ce que** l'organe élastique est un ressort de compression (29) disposé entre une extrémité libre (265) du bras radial (26) et le coulisseau (28).

5. Dispositif de fixation selon l'une quelconque des revendications 1 à 4, **caractérisé en ce que** la jupe (21) présente une forme concave du côté destiné à être en regard du support (B) et comprend un évidement radial (25) permettant le déplacement en translation de l'excroissance (281) du coulisseau (28).

6. Dispositif de fixation selon l'une quelconque des revendications 1 à 5, **caractérisé en ce que** l'élément de verrouillage (2) comprend au moins une ailette (231) pour l'application d'un couple de verrouillage.

7. Dispositif de fixation selon l'une quelconque des revendications 1 à 6, **caractérisé en ce que** le téton (1) est pourvu d'un plateau d'appui (18) pour le support (B).

8. Dispositif de fixation selon l'une quelconque des revendications 1 à 7, **caractérisé en ce que** le téton (1) est pourvu d'une embase (15) adaptée pour une fixation par enfichage du téton (1) dans l'élément (A).

9. Dispositif de fixation selon l'une quelconque des revendications 1 à 8, **caractérisé en ce que** le téton (1) comprend un bras transversal (13) pourvu de dents de verrouillage (14) formant les premiers moyens de verrouillage (14) et **en ce que** le corps cylindrique (23) de l'élément de verrouillage (2) est pourvu de rampes (233) menant à des crans de verrouillage (234) formant les seconds moyens de verrouillage (234).

10. Dispositif de fixation selon l'une quelconque des revendications 1 à 9, **caractérisé en ce que** la piste de guidage (4) est un poinçonnage en quart d'ellipse.

11. Dispositif de fixation selon l'une quelconque des revendications 1 à 9, **caractérisé en ce que** l'angle de pivotement de l'élément de verrouillage (2) entre la position d'assemblage (I) et la position de verrouillage (II) correspond à un quart de tour.

## Claims

1. A fastener for fastening an element (A) on a support (B), the device comprising
a pilot point (1) having first locking means (14) and that is adapted to be able to be secured to the element (A),
a locking element (2) having a skirt (21) to bear on the support (B) and on which a hollow cylindrical body (23) rises around a first axis (22), said body having second locking means (234) complementary to the first locking means (14) and being adapted to be able to receive the pilot point (1) coaxially so as to be able to pivot around it (1) between an assembly position (I) and a locking position (II), **characterized by**
adjustment means (26 to 29) acting along a second axis (27) containing an angle with the first axis (12) and that includes a protuberance (281) adapted to be able to cooperate with a curved guide path (4) formed on the support (B) so as to be able to pull the pilot point (2), along the second axis (27) toward a fastening position (II).

2. The fastener according to claim 1, **characterized in that** the adjustment means (26, 28, 29) comprise a slide (28) including the protuberance (281) and that is movable, under the strain of an elastic member (29), between the assembly position (I) and the fastening position (II).

3. The fastener according to claim 2, **characterized in that** the slide (28) is arranged translatably on a radial arm (26) extending from the cylindrical body (23) along the second axis (27).

4. The fastener according to claim 3, **characterized in that** the elastic member is a compression spring (29) positioned between a free end (265) of the radial arm (26) and the slide (28).

5. The fastener according to any one of claims 1 to 4, **characterized in that** the skirt (21) assumes a concave shape on the side designed to be across from the support (B) and comprises a radial recess (25) allowing the translation of the protuberance (281) of the slide (28).

6. The fastener according to any one of claims 1 to 5, **characterized in that** the locking element (2) comprises at least one fin (231) for applying a locking torque.

7. The fastener according to any one of claims 1 to 6, **characterized in that** the pilot point (1) is provided with a bearing plate (18) for the support (B).

8. The fastener according to any one of claims 1 to 7, **characterized in that** the pilot point (1) is provided with a base (15) adapted for fastening by plugging the pilot point (1) into the element (A).

9. The fastener according to any one of claims 1 to 8, **characterized in that** the pilot point (1) comprises a transverse arm (13) provided with locking teeth (14) forming the first locking means (14) and **in that** the cylindrical body (23) of the locking element (2) is provided with ramps (233) leading to locking notches (234) forming the second locking means (234).

10. The fastener according to any one of claims 1 to 9, **characterized in that** the guide path (4) is a quarter ellipse die stamping.

11. The fastener according to any one of claims 1 to 9, **characterized in that** the pivot angle of the locking element (2) between the assembly position (I) and the locking position (II) corresponds to a quarter revolution.

## Patentansprüche

1. Vorrichtung zur Befestigung eines Elements (A) auf einem Träger (B), wobei die Vorrichtung Folgendes umfasst:
einen Zapfen (1), umfassend erste Mittel zur Verriegelung (14), und der dazu ausgelegt ist, mit dem Element (A) fest verbunden zu sein,
ein Verriegelungselement (2), umfassend einen Mantel (21), um auf dem Träger (B) aufzuliegen, und auf dem sich, um eine erste Achse (22), ein hohler zylindrischer Körper (23) erhebt, umfassend zweite Verriegelungsmittel (234) zusätzlich zum den ersten Verriegelungsmitteln (14), und der dazu ausgelegt ist, den Zapfen (1) auf koaxiale Weise aufnehmen zu können, um sich zwischen einer Montageposition (I) und einer Verriegelungsposition (II) um sich selbst (1) drehen zu können, **gekennzeichnet durch**
Mittel zum Nachstellen des Spiels (26 bis 29), die entlang einer zweiten Achse (27) wirken, die einen Winkel mit der ersten Achse (12) einschließen, und die einen Vorsprung (281) umfassen, der dazu ausgelegt ist, mit einer gekrümmten Führungsspur (4) zusammenarbeiten zu können, die auf dem Träger (B) gebildet ist, um den Zapfen (1) **durch** die Drehung des Verriegelungselements (2) entlang der zweiten Achse (27) in eine Befestigungsposition (II) ziehen zu können.

2. Befestigungsvorrichtung nach Anspruch 1, **dadurch gekennzeichnet, dass** die Mittel zum Nachstellen (26, 28, 29) einen Stößel (28) umfassen, der den Vorsprung (281) aufweist, und der unter der Spannung eines elastischen Organs (29) zwischen der Montageposition (I) und der Befestigungsposition (II) beweglich ist.

3. Befestigungsvorrichtung nach Anspruch 2, **dadurch gekennzeichnet, dass** der Stößel (28) beweglich in Translation auf einem radialen Arm (26) angebracht ist, der sich vom zylindrischen Körper (23) entlang der zweiten Achse (27) erstreckt.

4. Befestigungsvorrichtung nach Anspruch 3, **dadurch gekennzeichnet, dass** das elastische Organ eine Kompressionsfeder (29) ist, die zwischen einem freien Ende (265) des radialen Arms (26) und dem Stößel (28) angebracht ist.

5. Befestigungsvorrichtung nach einem der Ansprüche 1 bis 4, **dadurch gekennzeichnet, dass** der Mantel (21) eine konkave Form auf der Seite aufweist, die dazu ausgelegt ist, gegenüber dem Träger (B) zu liegen und eine radiale Aussparung (25) aufweist, die die Verschiebung in Translation des Vorsprungs (281) des Stößels (28) ermöglicht.

6. Befestigungsvorrichtung nach einem der Ansprüche 1 bis 5, **dadurch gekennzeichnet, dass** das Verriegelungselement (2) mindestens eine Rippe (231) zur Anwendung eines Verriegelungsmoments umfasst.

7. Befestigungsvorrichtung nach einem der Ansprüche 1 bis 6, **dadurch gekennzeichnet, dass** der Zapfen (1) mit einer Stützplatte (18) für den Träger (B) ausgestattet ist.

8. Befestigungsvorrichtung nach einem der Ansprüche 1 bis 7, **dadurch gekennzeichnet, dass** der Zapfen (1) mit einer Basis (15) ausgestattet ist, die für eine Befestigung durch Einstecken des Zapfens (1) in das Element (A) ausgelegt ist.

9. Befestigungsvorrichtung nach einem der Ansprüche 1 bis 8, **dadurch gekennzeichnet, dass** der Zapfen (1) einen Querarm (13) umfasst, der mit Verriegelungszähnen (14) ausgestattet ist, die die ersten Verriegelungsmittel (14) bilden, und dadurch, dass der zylindrische Körper (23) des Verriegelungselements (2) mit Rampen (233) ausgestattet ist, die zu Verriegelungsrasten (234) führen, die die zweiten Verriegelungsmittel (234) bilden.

10. Befestigungsvorrichtung nach einem der Ansprüche 1 bis 9, **dadurch gekennzeichnet, dass** die Führungsspur (4) eine Lochung eines Viertels einer Ellipse ist.

11. Befestigungsvorrichtung nach einem der Ansprüche 1 bis 9, **dadurch gekennzeichnet, dass** der Drehwinkel des Verriegelungselements (2) zwischen der Montageposition (I) und der Verriegelungsposition (II) einer Vierteldrehung entspricht.
